# EUROPÄISCHE PATENTSCHRIFT

(11) **EP 3 277 078 B1**
(45) Veröffentlichungstag und Bekanntmachung des Hinweises auf die Patenterteilung: **08.05.2019**
(21) Anmeldenummer: 16717266.7
(22) Anmeldetag: 29.03.2016
(51) Int. Cl.: A01G 31/06, A01G 9/02, A01G 31/02

(54) **SÄULENELEMENT FÜR EINE VORRICHTUNG ZUM VERTIKALEN ANBAU VON PFLANZEN**
COLUMN ELEMENT FOR A DEVICE FOR THE VERTICAL CULTIVATION OF PLANTS
ÉLÉMENT DE TYPE COLONNE POUR DISPOSITIF DESTINÉ À LA CULTURE VERTICALE DE PLANTES

(30) Priorität: 31.03.2015 DE 102015004112
(43) Veröffentlichungstag der Anmeldung: 07.02.2018
(73) Patentinhaber: aponix GmbH, 69120 Heidelberg (DE)
(72) Erfinder: TIDONA, Marco, 69115 Heidelberg (DE)
(74) Vertreter: Reiser & Partner Patentanwälte mbB
(86) Internationale Anmeldenummer: PCT/EP2016/056826
(87) Internationale Veröffentlichungsnummer: WO 2016/156334

(56) Entgegenhaltungen:
- WO-A1-2010/102405
- US-A1- 2006 032 128
- US-A1- 2014 000 162

## Beschreibung

### Stand der Technik

Die Erfindung betrifft ganz allgemein Vorrichtungen zum vertikalen Anbau von Pflanzen, die durch Benetzen der Wurzeln mit einer wässrigen Nährlösung ernährt werden. Dabei kann es sich insbesondere um eine mineralische Nährlösung (Hydroponik) oder eine organische Nährlösung (Aquaponik) handeln.

Ausgangspunkt für die vorliegende Erfindung ist ein modular aufgebautes Säulenelement für eine derartige Vorrichtung. In der Säulenwandung sind mehrere Pflanzöffnungen ausgebildet, in denen Pflanzen so positionierbar sind, dass ihre Wurzeln ins Innere des Säulenelements wachsen, wo sie mit Nährlösung benetzt werden.

Der vertikale Anbau von Pflanzen gewinnt zunehmend an Bedeutung, insbesondere im Bereich des "Urban Farming". Da die hier zur Verfügung stehenden Flächen in der Horizontalen in der Regel sehr begrenzt sind, versucht man den Ertrag durch Verwendung von Pflanzgefäßen zu steigern, die einen vertikalen Anbau ermöglichen. Bei aeroponischen Pflanzsystemen werden die Pflanzen dazu so in dafür vorgesehenen Pflanzöffnungen des Pflanzgefäßes fixiert, dass ihre Wurzeln ins Innere des Pflanzgefäßes hineinwachsen, wo sie mit einem Aerosol einer Nährlösung benetzt werden. Dieses Aerosol kann beispielsweise mit Hilfe von Vernebelungs- oder Sprinklerdüsen im Pflanzgefäß erzeugt werden. Im Fall eines hydroponischen Pflanzsystems wurzeln die Pflanzen in einem anorganischen Substrat, das lediglich dem Halt der Pflanzen dient. Hier werden die Wurzeln über das Substrat mit Nährlösung benetzt. Beide Anbaumethoden bewirken ein starkes Wurzelwachstum, was zu einer Beschleunigung des Reifungsprozesses beiträgt und zu einem hohen Ertrag führt.

Aus der Praxis sind verschiedene Vorrichtungen und Pflanzgefäße für den vertikalen Anbau von Pflanzen bekannt, wie z.B. turmartige Vorrichtungen mit mehreren übereinander angeordneten, umlaufenden Pflanzwannen oder auch Pflanzwände mit rasterartig angeordneten Pflanzöffnungen in den Wandungsoberflächen. Diese bekannten Vorrichtungen bestehen zumeist aus mehreren relativ großen und sperrigen Einzelteilen, deren Transport und Montage mit einem vergleichsweise großen Aufwand verbunden sind. Dementsprechend werden diese Vorrichtungen in der Regel für einen bestimmten Einsatzort konzipiert, an dem sie einmalig aufgebaut und fest installiert werden.

In der US 2014/0000162 A1 wird eine Vorrichtung zum vertikalen Anbau von Pflanzen beschrieben, die durch Benetzen der Wurzeln mit einer wässrigen Nährlösung ernährt werden. Diese Vorrichtung umfasst mehrere modular aufgebaute Säulenelemente, in deren Wandungen Pflanzöffnungen ausgebildet sind. Die Säulenelemente sind an einem Gerüst in rasterartiger Anordnung nebeneinander und hintereinander aufgehängt. Des Weiteren umfasst diese Vorrichtung für jedes Säulenelement eine Versorgungsleitungen, die an das obere Ende des Säulenelements angeschlossen ist und in das Säuleninnere mündet, eine Abflussleitung, die an das untere Ende der Säule angeschlossen ist, einen Sammelbehälter für die Nährlösung, der sowohl an die Versorgungsleitung als auch an die Abflussleitung angeschlossen ist, und eine zentrale Pumpeneinrichtung, mit der die Nährlösung aus dem Sammelbehälter über die Versorgungsleitungen ins Säuleninnere gepumpt wird.

Das in der US 2014/0000162 A1 beschriebene Säulenelement ist aus mehreren gleichartigen Pflanztöpfen zusammengesetzt. Jeder Pflanztopf besteht aus einer kreisrunden Bodenplatte, einer zylindrischen Wandung und einem Rohrabschnitt, der sich von der Mitte der Bodenplatte bis zum oberen Rand des Pflanztopfs erstreckt. Die Pflanzöffnungen sind als Auskragungen im oberen Randbereich der zylindrischen Wandung der einzelnen Pflanztöpfe realisiert. Die Pflanztöpfe eines Säulenelements werden so aufeinander gesteckt, dass die Rohrabschnitte ein Zentralrohr bilden, das sich über die gesamte Höhe des Säulenelements erstreckt. Außerdem ist der untere Randbereich der zylindrischen Wandung bzw. der Bodenplatte jedes Pflanztopfs mit einer umlaufenden Nut versehen, die als Aufnahme für den oberen Randbereich eines angrenzenden Pflanztopfs dient. In den Bodenplatten der Pflanztöpfe sind Durchgangslöcher zur Entwässerung ausgebildet, so dass die Nährlösung durch das gesamte Säulenelement, d.h. vom obersten Pflanztopf bis zum untersten Pflanztopf, und bis in den Sammelbehälter hindurchlaufen bzw. tropfen kann.

Das in der US 2014/0000162 A1 beschriebene Aufbaukonzept ermöglicht die Realisierung von Säulenelementen unterschiedlicher Höhe, indem die Anzahl der aufeinander gesetzten baugleichen Pflanztöpfe variiert wird. Auf diese Weise können die bekannten Säulenelemente auch einfach an die Besonderheiten des jeweiligen Installationsorts angepasst werden.

Allerdings haben die in der US 2014/0000162 A1 beschriebenen Pflanztöpfe eine relativ komplizierte dreidimensionale Form. Dementsprechend aufwendig ist deren Fertigung. Außerdem nehmen die einzelnen Pflanztöpfe sowohl beim Transport als auch bei der Lagerung ein sehr großes Volumen ein, da sie weder zusammenlegbar noch platzsparend stapelbar sind. Eine Wiederverwendung der Pflanztöpfe im Rahmen einer anderen Installation ist in der Regel nicht vorgesehen, da sich deren Reinigung nach dem Gebrauch und der Demontage eines Säulenelements aufgrund der komplizierten dreidimensionalen Form als problematisch erweist.

Die US 2006/032128 A1 beschreibt ein Säulenelement nach dem Oberbegriff von Anspruch 1. Das vorbekannten hydroponische System weist eine Säule auf, welche aus mehreren ringförmigen Modulen zusammengesetzt ist. In den Modulen sind Pflanzöffnungen angeordnet. Am unteren Ende der Säule ist ein Reservoir vorgesehen, welches Wasser bzw. Nährlösung aufnimmt.

Demgegenüber stellt sich die Erfindung die Aufgabe, die Herstellung und die Handhabung des Säulenelements zu vereinfachen.

Die Aufgabe wird mit den Merkmalen von Anspruch 1 gelöst.

### Offenbarung der Erfindung

Mit der vorliegenden Erfindung wird ein modular aufgebautes Säulenelement der eingangs genannten Art vorgeschlagen, dessen Einzelteile platzsparend gestapelt, sehr einfach transportiert, montiert, demontiert und gereinigt werden können.

Erfindungsgemäß umfasst der modulare Aufbau des Säulenelements dazu ein Deckelteil, ein Bodenteil und mindestens einen Wandungsring zwischen dem Deckelteil und dem Bodenteil. Jeder Wandungsring ist aus mehreren Ringsegmenten zusammengesetzt, in denen die Pflanzöffnungen ausgebildet sind. Das Deckelteil ist endseitig auf dem obersten Wandungsring angeordnet und das Bodenteil ist endseitig auf dem untersten Wandungsring angeordnet. Dieser Aufbau des Säulenelements wird mit Hilfe von Spannelementen fixiert und stabilisiert, die auf der Außenseite des Säulenelements zwischen dem Deckelteil und dem Bodenteil gespannt sind.

Demnach kann die Höhe des beanspruchten Säulenelements über die Anzahl der Wandungsringe variiert werden. Erfindungswesentlich ist, dass diese Wandungsringe aus mehreren Ringsegmenten zusammengesetzt werden. Alle Einzelteile eines Säulenelements können zusammengesteckt sein. Erfindungsgemäß werden diese Steckverbindungen durch Spannelemente auf der Außenseite des Säulenelements zwischen dem Deckelteil und dem Bodenteil soweit fixiert und stabilisiert, dass das Säulenelement an seinem Einsatzort installiert und bepflanzt werden kann und auch die ständig zunehmende Biomasse der wachsenden Pflanzen tragen kann. Dadurch können die Einzelteile des Säulenelements und insbesondere die Verbindungsbereiche konstruktiv sehr einfach ausgestaltet werden. Dies ermöglicht zudem eine Optimierung der Einzelteile im Hinblick auf eine einfache und kostengünstige Fertigung, auf eine einfache Reinigung zur Wiederverwendung der Einzelteile sowie auf Stapelbarkeit. Darüber hinaus kann das Säulenelement gedreht werden, beispielsweise um die Pflanzen gleichmäßig zu beleuchten. Bei einer hängenden Anordnung kann das gesamte Säulenelement beispielsweise mittels eines Drehhakens in der Aufhängung gedreht werden. Bei einer stehenden Anordnung können z.B. die Wandungsringe relativ zu dem Ständer gedreht werden.

Grundsätzlich gibt es viele verschiedene Möglichkeiten für die Realisierung eines erfindungsgemäßen Säulenelements, sowohl was die Anzahl der Wandungsringe und die Anzahl der Ringsegmente eines Wandungsrings betrifft, als auch was die Abmessungen und Form der Einzelteile - Deckelteil, Bodenteil und Ringsegmente - angeht. Dabei werden immer auch die Art der Bepflanzung und die räumlichen Gegebenheiten des Installationsorts eine Rolle spielen.

In der Regel wird der Aufbau einer erfindungsgemäßen Pflanzsäule mehrere Wandungsringe umfassen. Die Wandungsringe können kreisrund ausgebildet sein. Dann empfiehlt es sich zur Erhöhung der Stabilität des Aufbaus, die Ringsegmente der aneinander grenzenden Wandungsringe versetzt zueinander anzuordnen, so dass die übereinander angeordneten Ringsegmente seitlich ineinander verzahnt sind.

Eine vorteilhafte Ausgestaltung der Erfindung sieht vor, dass die Ringsegmente des Wandungsrings zusammengesteckt sind. Eine solche Gestaltung lässt sich kostengünstig herstellen und zügig aufbauen. Das Zusammenstecken kann dann besonders einfach erfolgen, wenn die Ringsegmente mit Nut und Feder versehen sind. Das Zusammenstecken kann zudem mit den unten beschriebenen Verbindungsmitteln erfolgen, die durch Löcher in den Ringsegmenten gesteckt sind.

Vorzugsweise ist vorgesehen, dass das Deckelteil mindestens einen Anschluss für eine Versorgungsleitung aufweist.

Vorzugsweise ist vorgesehen, dass das Bodenteil mindestens einen Anschluss für eine Abflussleitung aufweist.

In vorteilhafter Weise kann vorgesehen sein, dass das Deckelteil auf den obersten Wandungsring aufgesteckt ist. Weiterhin ist von Vorteil, wenn das Bodenteil auf den untersten Wandungsring aufgesteckt ist.

In einer bevorzugten Ausführungsform der Erfindung haben alle Ringsegmente der Wandungsringe dieselben geometrischen Abmessungen und sind baugleich. Je nach Säulendurchmesser können beispielsweise vier, sechs oder acht Ringsegmente vorgesehen sein, aber auch eine ungerade Anzahl von Ringsegmenten ist möglich. Bei baugleichen Ringsegmenten und einer versetzten Anordnung der Ringsegmente aneinandergrenzender Wandungsringe lässt sich sehr einfach eine vertikal versetzte Anordnung der Pflanzöffnungen realisieren, so dass die Fläche der Säulenwandung von den Pflanzen optimal ausgenutzt werden kann. Außerdem können baugleiche Ringsegmente sehr kostengünstig gefertigt werden.

Wenn das Deckelteil und das Bodenteil des erfindungsgemäßen Säulenelements beide einen endseitigen Säulenabschluss mit Anschlussöffnung an den Versorgungskreislauf bilden, können auch diese beiden Einzelteile des Säulenelements baugleich ausgebildet werden. Dies trägt nicht nur zu einer Reduzierung der Fertigungskosten bei. Es ermöglicht auch eine platzsparende Stapelung von Deckel- und Bodenteil während der Lagerung und des Transports. Außerdem vereinfacht sich dadurch auch die Montage des Säulenelements.

Eine weitere vorteilhafte Ausgestaltung der Erfindung sieht vor, dass die Ringsegmente jeweils einen seitlichen Randbereich aufweisen und dass die Ringsegmente in den seitlichen Randbereichen miteinander verbunden sind. Auf diese Weise lässt sich mit geringem Aufwand eine stabile Konstruktion erreichen.

Vorzugsweise sind die seitlichen Randbereiche von zwei benachbarten Ringsegmenten überlappend angeordnet und weisen Löcher auf, durch die sich Verbindungsmittel erstrecken, welche die Ringsegmente aneinander fixieren. Auf diese Weise können die Ringsegmente schnell und zuverlässig zusammengesetzt werden. Besonders bevorzugt ist dabei, wenn die Verbindungsmittel Nieten umfassen.

Die Nährlösung wird am oberen Ende des Säulenelements über eine oder mehrere Anschlussöffnungen als Aerosol oder in Tröpfchenform in das Säuleninnere eingebracht, setzt sich dann an der Innenwandung und den Wurzeln im Säuleninneren ab und fließt schließlich aufgrund der Schwerkraft nach unten zum Bodenteil, wo es über mindestens eine Abflussleitung aus dem Säulenelement heraus und in einen Sammelbehälter geleitet wird, der auch als Sumpf bezeichnet wird. Deshalb sollte die Steckverbindung zwischen den Ringsegmenten eines Wandungsrings so beschaffen sein, dass die Nährlösung möglichst nicht ohne weiteres aus dem Verbindungsbereich austreten kann. Jedoch muss die Steckverbindung weder hundertprozentig wasserdicht noch druckdicht sein.
Diese Bedingungen erfüllt beispielsweise eine Spundverbindung zwischen den einzelnen Ringsegmenten, wenn der eine seitliche Rand der Ringsegmente als Federelement dient, während der andere seitliche Rand der Ringsegmente als Aufnahmenut ausgebildet wird. Derartige Ringsegmente können sehr einfach gefertigt werden und auch das Zusammenfügen zu einem Wandungsring gestaltet sich in diesem Fall äußerst einfach.

Insbesondere bei der Montage der Säulenelemente erweist es sich als vorteilhaft, wenn sich die Ringsegmente eines Wandungsrings nicht ohne weiteres vertikal gegeneinander verschieben können, so dass der Wandungsring als Ganzes auf den Aufbau des Säulenelements aufgesetzt werden kann. Deshalb sind in einer Ausführungsform der Erfindung im Randbereich der Ringsegmente zapfenartige Vorsprünge ausgebildet, die in entsprechende Ausnehmungen im Randbereich eines benachbarten Ringsegments eingreifen, so dass die Ringsegmente eines Wandungsrings in vertikaler Richtung gegeneinander fixiert sind.

Auch die Steckverbindungen zwischen den einzelnen Wandungsringen eines Säulenelements sollten so beschaffen sein, dass die Nährlösung möglichst nicht aus dem Verbindungsbereich austreten kann. In einer vorteilhaften Ausführungsform der Erfindung wird dies einfach dadurch erreicht, dass der untere Rand der Ringsegmente gegenüber seiner gekrümmten Wandungsfläche zurücktritt, so dass beim Zusammenstecken zweier Wandungsringe der untere Rand des oberen Wandungsrings die Wandung des unteren Wandungsrings hintergreift.

Wie bereits erwähnt, werden die Ringsegmente von übereinander gesteckten Wandungsringen bevorzugt versetzt zueinander angeordnet. In diesem Zusammenhang erweist es sich als vorteilhaft, wenn die Ringsegmente mit Justier- bzw. Positionierhilfen ausgestattet sind. Diese können beispielsweise in Form von wulstartigen Vorsprüngen und entsprechenden Nuten im oberen und unteren Randbereich der Ringsegmente realisiert sein.

Eine vorteilhafte Ausgestaltung der Erfindung sieht vor, dass an einer Innenwandung des Ringsegments eine Leiteinrichtung vorgesehen sind, welche die wässrige Nährlösung zu der Pflanzöffnung leitet. Auf diese Weise können die Pflanzen besonders effektiv mit Wasser bzw. Nährlösung versorgt werden. Vorzugsweise sind Leiteinrichtungen an allen Ringsegmenten vorgesehen. Besonders bevorzugt ist dabei jeweils eine Leiteinrichtung pro Pflanzöffnung vorgesehen.

Eine Weiterbildung dieses Erfindungsgedankens sieht vor, dass die Leiteinrichtung Vorsprünge umfasst, welche sich von einer Innenwandung des Ringsegments nach innen erstrecken. Die Vorsprünge können Wasser bzw. Nährlösung, die an der Innenseite des Säulenelements herabläuft, zu der Pflanzöffnung leiten. Damit können Wurzeln von Pflanzen, die in die Pflanzöffnung eingesetzt sind, wirksam befeuchtet und mit Nährstoffen versorgt werden. Es genügt, im oberen Bereich Wasser auf die Innenwandung aufzubringen, was z.B. durch Spritzen geschehen kann. Aufgrund der Schwerkraft läuft das Wasser dann nach unten und wird durch die Vorsprünge zu den Pflanzöffnungen geleitet. Vorzugsweise sind die Vorsprünge als Flügel ausgebildet.

Von Vorteil ist vorgesehen, dass das Ringsegment eine Halterung für eine Pflanze aufweist, wobei die Halterung einen ersten Wandungsabschnitt, der schräg nach innen weist, und einen zweiten Wandungsabschnitt, der schräg nach außen weist, umfasst, wobei die Pflanzöffnung zwischen dem ersten und zweiten Wandungsabschnitt angeordnet ist. Auf diese Weise können die Pflanzen schräg angeordnet werden, wobei sich die Wurzeln in das Innere das Pflanzgefäßes erstrecken können.

In besonders vorteilhafter Weise kann vorgesehen sein, dass die Leiteinrichtung auf der Innenseite des ersten Wandungsabschnitts angeordnet ist. Auf diese Weise kann Wasser besonders einfach und effizient zu den Pflanzöffnungen geleitet werden.

Das erfindungsgemäße Aufbaukonzept ermöglicht auch die Realisierung von sehr hohen Säulenelementen, d.h. Säulenelementen mit einer Höhe größer als 5m. Um bei derartig hohen Säulenelementen eine hinreichende Benetzung der Pflanzenwurzeln im unteren Säulenbereich zu gewährleisten, werden mehrere Vernebelungs- bzw. Zerstäuber- und/oder Sprinklerdüsen im Säuleninneren über die Höhe des Säulenelements verteilt angeordnet und von der Versorgungsleitung mit Nährlösung gespeist. Dazu kann die Versorgungsleitung beispielsweise an eine zentral im Säuleninneren positionierte Rohrleitung mit entsprechenden Düsen angeschlossen werden oder auch an eine spiralförmige Leitung, die entlang der Innenwandung des Säulenelements geführt ist und mit entsprechenden Düsen ausgestattet ist.

### Kurze Beschreibung der Zeichnungen

Wie bereits voranstehend erörtert, gibt es verschiedene Möglichkeiten, die Lehre der vorliegenden Erfindung in vorteilhafter Weise auszugestalten und weiterzubilden. Dazu wird einerseits auf die nachgeordneten Patentansprüche verwiesen und andererseits auf die nachfolgende Beschreibung eines Ausführungsbeispiels der Erfindung anhand der Figuren.
- **Fig. 1**: zeigt eine perspektivische Darstellung eines erfindungsgemäßen Säulenelements 100 mit fünf Wandungsringen 10;
- **Fig. 2**: zeigt eine perspektivische Darstellung eines solchen Wandungsrings 10, der aus sechs Ringsegmenten 1 zusammengesteckt ist;
- **Fig. 3a, 3b**: zeigen eine Draufsicht und eine perspektivische Darstellung eines solchen Ringsegments 1;
- **Fig. 4a, 4b**: zeigen eine perspektivische Darstellungen von außen und innen eines Ringsegments 1' nach einer weiteren Ausführungsform;
- **Fig. 5a, 5b, 5c**: zeigen eine Seitenansicht, eine perspektivische Darstellung und einen Querschnitt einer weiteren Ausführungsform eines erfindungsgemäßen Säulenelements;
- **Fig. 6**: zeigt eine perspektivische Darstellung eines Ständers.

### Ausführungsform der Erfindung

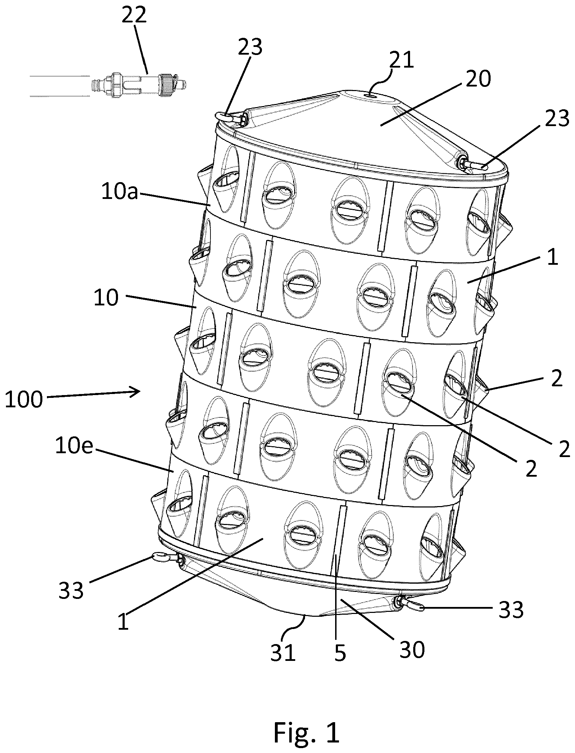

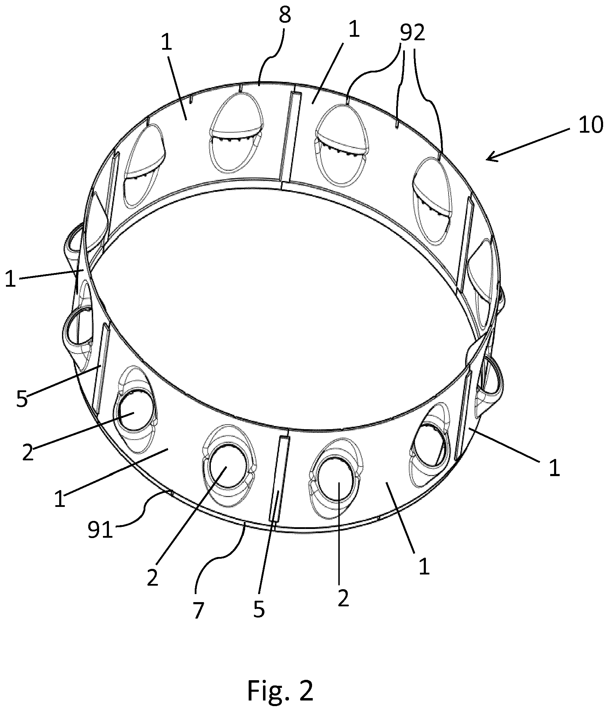

Das in Fig. 1 dargestellte Säulenelement 100 dient zum vertikalen Anbau von Pflanzen, die durch Benetzen der Wurzeln mit einer wässrigen Nährlösung ernährt werden. Das Säulenelement 100 ist modular aufgebaut und umfasst ein Deckelteil 20, ein Bodenteil 30 und fünf gleichartige Wandungsringe 10 zwischen dem Deckelteil 20 und dem Bodenteil 30. Im hier beschriebenen Ausführungsbeispiel besteht jeder Wandungsring 10 aus sechs baugleichen Ringsegmenten 1, in denen jeweils zwei Pflanzöffnungen 2 ausgebildet sind. Dies wird auch noch einmal durch Fig. 2 veranschaulicht. Die Höhe des Säulenelements 100 und damit die Anzahl der zur Verfügung stehenden Pflanzöffnungen 2 können über die Anzahl der Wandungsringe 10 flexibel an die jeweiligen Platzverhältnisse angepasst werden.

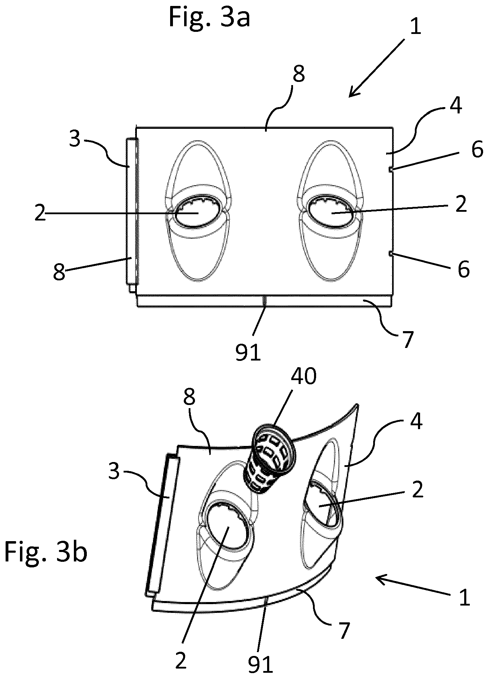

Die Pflanzöffnungen 2 sind hier als Halterungen für Netztöpfe 40 konzipiert, die von außen schräg zur Säulenachse in die Pflanzöffnungen 2 eingeschoben werden können, was insbesondere durch Fig. 3b veranschaulicht wird. Die Setzlinge oder Jungpflanzen werden entweder mit Hilfe eines anorganischen Substrats oder auch einfach nur mit Hilfe von Klammern, sogenannten Grow-Grips, in den Netztöpfen 40 fixiert. Die Wurzeln wachsen dann durch den jeweiligen Netztopf 40 hindurch und hängen im Inneren des Säulenelements 100 frei, wo sie bis zur Ernte mit Nährlösung und Sauerstoff versorgt werden. Dazu wird im Innern des Säulenelements ein Aerosol der Nährlösung erzeugt, so dass die Wurzeln möglichst allseitig benetzt werden. Diese Ernährungsmethode begünstigt zunächst das Wurzelwachstum und dann auch das Wachstum und den Reifungsprozess der Pflanzen insgesamt bei vergleichsweise geringen Pflanzabständen. Zur Ernte kann die Pflanze einfach zusammen mit dem Netztopf 40 aus der Pflanzöffnung 2 des Säulenelements 100 entnommen werden.

Die Ringsegmente 1 eines Wandungsrings 10 sind zusammengesteckt und auch die Wandungsringe 10 des Säulenelements 100 sind aufeinander gesteckt. Die Art dieser Steckverbindungen und die Ausgestaltung der seitlichen, oberen und unteren Randbereiche der Ringsegmente 1 werden anhand der Figuren 3a und 3b näher erläutert.

Das Deckelteil 20 ist endseitig auf den obersten Wandungsring 10a aufgesteckt, so wie das Bodenteil 30 endseitig auf den untersten Wandungsring 10e aufgesteckt ist. Auch das Deckelteil 20 und das Bodenteil 30 sind im hier dargestellten Ausführungsbeispiel baugleich. Diese beiden Teile 20 und 30 sind konisch geformt und haben eine mittige Anschlussöffnung 21 bzw. 31, über die das Säulenelement 100 an einen Versorgungskreislauf für die Nährlösung angeschlossen wird. Dazu wird die Versorgungsleitung beispielsweise über einen Klickanschluss 22, wie er für Gartenschläuche verwendet wird, an die Anschlussöffnung 21 des Deckelteils 20 angekoppelt. Bei Säulenelementen bis ca. 2m Höhe befinden sich die Vernebelung- oder Sprinklerdüsen zum Erzeugen des Aerosols im Bereich des Deckelteils. Bei höheren Säulenelementen empfiehlt es sich, die Düsen über die Höhe des Säuleninnenraums zu verteilen, damit auch die Pflanzen im Unteren Bereich des Säulenelements ausreichend mit Nährlösung versorgt werden. Dazu kann beispielsweise eine zentrale Rohrleitung innerhalb des Säulenelements angeordnet werden, die mit einer über die gesamte Höhe des Säulenelements verteilten Düsenanordnung ausgestattet ist.

Im trichterförmigen Bodenteil 30 sammelt sich die Nährlösung, nachdem sie sich an der Innenwandung und den Wurzeln niedergeschlagen hat und das Säulenelement 100 durchlaufen hat. Hier ist der Anschluss 31 für die Abflussleitung der Nährlösung angeordnet, der ebenfalls einfach in Form eines Klick-Anschlusses realisiert sein kann.

Im Randbereich des Deckelteils 20 und des Bodenteils 30 sind jeweils drei Ringhaken 23 und 33 angebracht, die als Befestigungs- und Führungsösen für Spannelemente dienen. Diese werden auf der Außenseite des Säulenelements 100 zwischen dem Deckelteil 20 und dem Bodenteil 30 gespannt, um den Aufbau des Säulenelements 100 zu fixieren und zu stabilisieren. Als Spannelemente können beispielsweise Flachbänder oder Nylon-Seile verwendet werden.

Die Pflanzöffnungen 2 eines Wandungsrings 10 des in Fig. 1 dargestellten Säulenelements sind immer versetzt zu den Pflanzöffnungen 2 der benachbarten Wandungsringe 10 angeordnet, so dass den Pflanzen möglichst viel Platz zur Entfaltung und für Licht- und Lufteinwirkung zur Verfügung steht. Dazu wurden die einzelnen Wandungsringe 10 so aufeinander gesteckt, dass die Ringsegmente 1 der aneinander grenzenden Wandungsringe 10 versetzt zueinander angeordnet sind.

Fig. 3a zeigt eine Draufsicht auf ein Ringsegment 1 mit den zwei Pflanzöffnungen 2 zur Aufnahme von Netztöpfen 40. Die perspektivische Ansicht der Fig. 3b verdeutlicht die Wölbung des Ringsegments 1. Der linke Randbereich des Ringsegments 1 ist als Aufnahmenut 3 ausgestaltet, während der rechte Randbereich 4 dieselbe Wandungsstärke aufweist wie der Mittelbereich des Ringsegments 1. Die Aufnahmenut 3 des linken Randbereichs ist so ausgelegt, dass sie einfach auf den rechten Randbereich 4 eines angrenzenden Ringsegments 1 aufgesteckt werden kann. Dabei entsteht eine Spundverbindung 5 zwischen den beiden Ringsegmenten 1, wobei der rechte Randbereich 4 des einen Ringsegments 1 als Federelement 4 fungiert. Innerhalb der Aufnahmenut 3 sind zapfenartige Vorsprünge ausgebildet, die hier aber nicht zu erkennen sind. Beim Zusammenstecken von zwei Ringsegmenten 1 greifen diese Vorsprünge in entsprechende Ausnehmungen 6 im rechten Randbereich des benachbarten Ringsegments 1 ein, so dass die Ringsegmente 1 eines Wandungsrings 10 in vertikaler Richtung gegeneinander fixiert sind.

Der untere Rand 7 des Ringsegments 1 tritt gegenüber seiner gekrümmten Wandungsfläche zurück, so dass beim Zusammenstecken zweier Wandungsringe 10 der untere Rand 7 des oberen Wandungsrings die Wandung des unteren Wandungsrings hintergreift. Der untere Randbereich 7 und der obere Randbereich 8 des Ringsegments 1 sind mit Justier- bzw. Positionierhilfen für das Aufeinanderstecken der Wandungsringe 10 ausgestattet, die gewährleisten, dass die Ringsegmente 1 der aneinander grenzenden Wandungsringe 10 versetzt zueinander angeordnet sind. Diese Justier- und Positionierhilfen sind hier in Form eines wulstartigen Vorsprungs 91 auf der Außenseite des unteren Randbereichs und einer entsprechenden Nut 92 auf der Innenseite des oberen Randbereichs 8 realisiert, die insbesondere in Fig. 2 zu erkennen ist. Beim Aufeinanderstecken der Wandungsringe 10 sollen nämlich immer die wulstartigen Vorsprünge 91 im unteren Randbereich 7 der Ringsegmente 1 in eine entsprechende Nut 92 im oberen Randbereich 8 der angrenzenden Ringsegmente 1 eingreifen.

Alle Einzelteile des hier beschriebenen Säulenelements, nämlich die baugleichen Deckel- und Bodenteile 20 und 30 sowie die baugleichen Ringsegmente 1, werden bevorzugt aus einem robusten Kunststoff gefertigt, der möglichst hitze- und witterungsbeständig ist. Das Kunststoffmaterial sollte außerdem lichtundurchlässig und UV-beständig sein. Zudem sollte es stoßfest, bruchfest und möglichst formstabil sein. Zur Fertigung bietet sich die Spritzgusstechnik an.

Im Hinblick auf eine gleichmäßige Beleuchtung der Pflanzen mit Sonnen- oder Kunstlicht ist es von Vorteil, wenn das erfindungsgemäße Säulenelement drehbar gelagert wird. Es kann dazu an einer entsprechenden Halterung aufgehängt werden und/oder auch mit einem Ständer versehen werden.

Das erfindungsgemäße Säulenelement kann innerhalb von Gewächshäusern, unter einer Überdachung und auch im Freien als einzelne Pflanzsäule betrieben werden oder auch im Rahmen einer Vorrichtung zum vertikalen Anbau von Pflanzen, die eine Vielzahl von Säulenelementen gleicher oder auch anderer Bauart umfasst. Voraussetzung ist lediglich eine Hydroponik- oder Aeroponik-Kreislaufanlage zur Versorgung der Pflanzen mit Nährlösung, an die das Säulenelement angeschlossen werden kann. Erwähnt sei hier auch noch der Einsatz des erfindungsgemäßen Säulenelements in Verbindung mit einer Aquaponikanlage, mit der die Nährlösung für die Pflanzen ökologisch, mit Hilfe von Fischen erzeugt wird, die mit proteinhaltigem Futter versorgt werden.

Jedenfalls bietet der modulare Aufbau des erfindungsgemäßen Säulenelements die Möglichkeit, die Höhe des Säulenelements und damit auch die Anzahl der Pflanzplätze sehr flexibel zu gestalten, um so die zur Verfügung stehende Stellfläche und die örtlichen Gegebenheiten möglichst ertragseffizient auszunutzen. Außerdem lassen sich die erfindungsgemäßen Säulenelemente nicht nur sehr einfach aufbauen und installieren, sondern auch demontieren, einfach reinigen, platzsparend lagern und kostengünstig transportieren, um andernorts neu konzipiert und aufgebaut zu werden. So können die erfindungsgemäßen Säulenelemente ganzjährig oder auch nur saisonal eingesetzt werden.

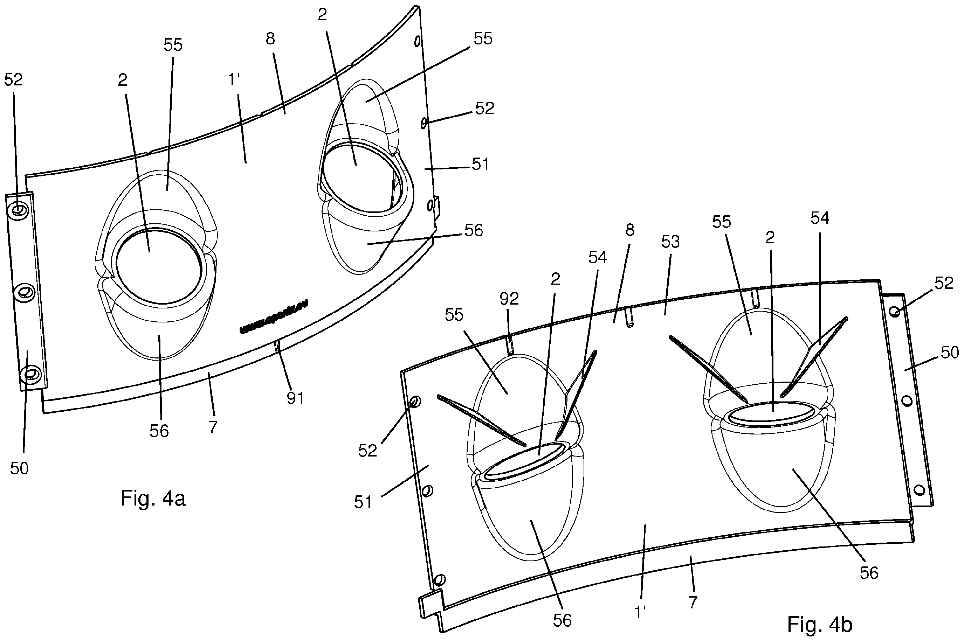

Die Figuren 4a und 4b zeigen eine weitere Ausführungsform eines Ringsegments 1'. Das Ringsegment 1' ist dabei ähnlich wie das Ringsegment 1 ausgebildet. Auf die obige Beschreibung, die soweit Übereinstimmungen bestehen, entsprechend gilt, wird Bezug genommen. Fig. 4a zeigt die Außenseite des Ringsegments 1'.

Das Ringsegment 1' weist eine gekrümmte Form auf. In dem Ringsegment 1' sind wiederum Pflanzöffnungen 2 vorgesehen. Im dargestellten Ausführungsbeispiel weist das Ringsegment 1' zwei Pflanzöffnungen 2 auf.

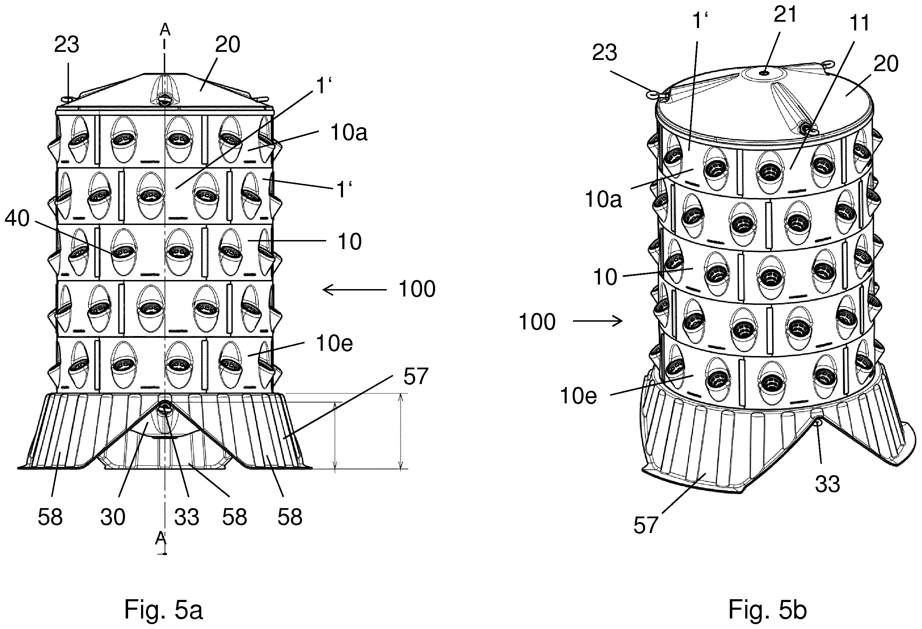

Das Ringsegment 1' ist so ausgebildet, dass aus mehreren Ringsegmenten 1' ein Wandungsring 10 zusammengesetzt werden kann (vgl. auch Fig. 5a). Die Ringsegmente 1' weisen dabei seitliche Randbereiche 50 und 51 auf. Eines der Ringsegmente 1' kann dabei in dem Randbereich 50 mit dem Randbereich 51 des benachbarten Ringsegments verbunden werden. Hierzu sind im zusammengebauten Zustand die seitlichen Randbereiche 50, 51 von zwei benachbarten Ringsegmenten 1' überlappend angeordnet. Fig. 4a lässt insoweit erkennen, dass der Randbereich 50 in radialer Richtung etwas weiter außen als der Randbereich 51 angeordnet ist. Die Randbereiche 50, 51 weisen jeweils Löcher 52 auf. Im dargestellten Ausführungsbeispiel weist der seitliche Randbereich 51 drei Löcher 52 und der seitliche Randbereich 50 gleichfalls drei Löcher 52 auf. Die Löcher 52 der Randbereiche 50 und 51 sind dabei so angeordnet, dass sie miteinander in Deckung gebracht werden können. Das Ringsegment 1' kann mit Befestigungsmitteln, die sich durch die Löcher 52 erstrecken, mit einem benachbarten Ringsegment 1' verbunden werden. Die Befestigungsmittel können insbesondere als Nieten ausgebildet sein. Auf diese Weise kann aus mehreren identisch ausgebildeten Ringsegmenten 1' ein Wandungsring 10 zusammengesetzt und stabil verbunden werden.

Das Ringsegment 1' weist einen unteren Rand 7 auf, der wie bei dem Ringsegment 1 ausgebildet ist. Hierauf wird verwiesen.

Fig. 4b zeigt die Innenseite des Ringsegments 1'. Hier ist gut zu erkennen, dass an der Innenwandung 53 des Ringsegments 1' eine Leiteinrichtung 54 vorgesehen ist, welche wässrige Nährlösungen zu der Pflanzöffnung 2 leitet. Im dargestellten Ausführungsbeispiel ist jede der Pflanzöffnungen 2 mit einer Leiteinrichtung 54 versehen.

Die Figuren 4a und 4b zeigen weiterhin, dass der Rand der Pflanzöffnungen 2 glatt ausgebildet ist.

Die Leiteinrichtung 54 umfasst Vorsprünge, welche sich von der Innenwandung 53 des Ringsegments 1' nach innen erstrecken. Die Vorsprünge sind als Flügel ausgebildet. Im dargestellten Ausführungsbeispiel sind für eine Pflanzöffnung 2 zwei V-förmig angeordnete Vorsprünge vorgesehen. Durch die Vorsprünge wird Wasser, das auf die Innenwandung aufgebracht wird und an dieser herunterläuft, unter der Wirkung der Schwerkraft zu der Pflanzöffnung 2 geleitet.

Die Figuren 4a und 4b lassen weiterhin gut erkennen, dass das Ringsegment 1' eine Halterung für Pflanzen aufweist, wobei die Halterung einen ersten Wandungsabschnitt 55 aufweist, der schräg nach innen weist. Weiterhin umfasst die Halterung einen zweiten Wandungsabschnitt 56, der schräg nach außen weist. Zwischen dem ersten und dem zweiten Wandungsabschnitt 55, 56 ist die Pflanzöffnung 2 angeordnet. Die Leiteinrichtung 54 ist dabei, wie Fig. 4b gut erkennen lässt, auf der Innenseite des ersten Wandungsabschnitts 55 angeordnet.

Fig. 5a zeigt eine Seitenansicht eines Säulenelements 100, das aus den Ringsegmenten 1' modular aufgebaut ist. Das Säulenelement 100 umfasst im dargestellten Ausführungsbeispiel fünf Wandungsringe 10. Jeder Wandungsring 10 ist im dargestellten Ausführungsbeispiel aus sechs Ringsegmenten 1' zusammengesetzt. Die Ringsegmente 1' sind dabei in der oben beschriebenen Weise mit nicht dargestellten Nieten miteinander verbunden.

Fig. 5b zeigt eine perspektivische Darstellung des Säulenelements 100 aus Fig. 5a.

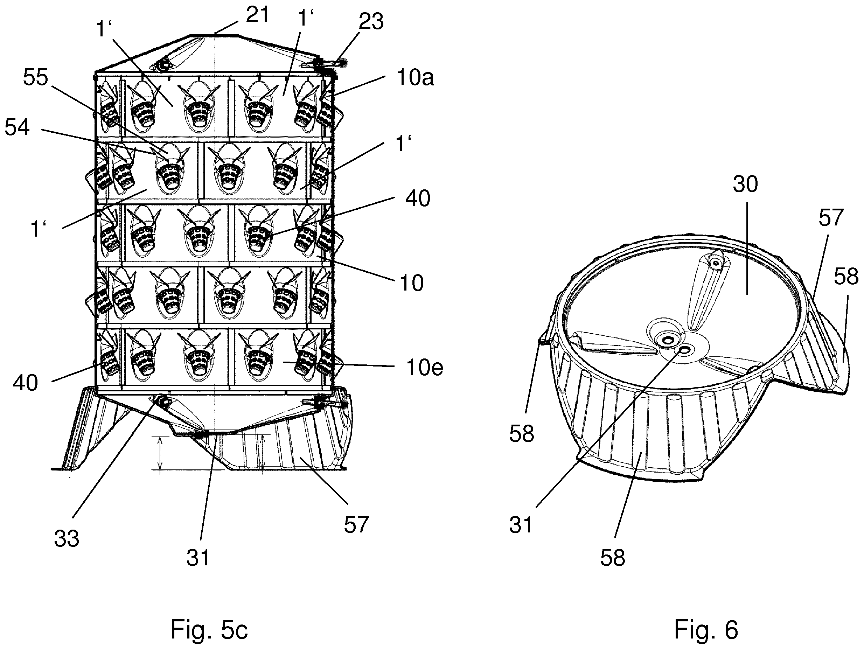

Fig. 5c zeigt einen Querschnitt durch das Säulenelement 100 aus Fig. 5a entlang der Linie A - A. Gut zu erkennen sind auch hier die an der Innenwandung angeordneten Leiteinrichtungen 54, welche Wasser bzw. Nährlösung zu den Pflanzkörben 40 leiten.

Die Figuren 5a bis 5c zeigen darüber hinaus, dass das Säulenelement stehend aufgestellt werden kann. Hierzu ist ein Ständer 57 am unteren Ende des Säulenelements 100 vorgesehen. Im dargestellten Ausführungsbeispiel weist der Ständer 57 drei über den Umfang verteilt angeordnete Füße 58 auf. Der Ständer 57 ist dabei umlaufend ausgebildet und weist eine Aufnahme für den Wandungsring 10e auf. Im dargestellten Ausführungsbeispiel ist dabei das Bodenteil 30 in den Ständer 57 integriert.

In dem Randbereich des Deckelteils 20 und des Bodenteils 30 sind wiederum jeweils drei Ringhaken 23 und 33 angebracht, die als Befestigungs- und Führungsösen für nicht dargestellte Spannelemente dienen. Mit den Spannelementen kann das Deckelteil 20 zu dem Bodenteil 30 hingezogen werden. Auf diese Weise kann der Aufbau des Säulenelements 100 stabilisiert werden.

Fig. 6 zeigt eine perspektivische Darstellung des Ständers 57.

## Patentansprüche

1. Säulenelement für eine Vorrichtung zum vertikalen Anbau von Pflanzen, die durch Benetzen der Wurzeln mit einer wässrigen Nährlösung ernährt werden,
• wobei das Säulenelement (100) modular aufgebaut ist und
• wobei in der Wandung des Säulenelements (100) mehrere Pflanzöffnungen (2) ausgebildet sind, in denen Pflanzen so positionierbar sind, dass ihre Wurzeln ins Innere des Säulenelements (100) wachsen,
wobei der modulare Aufbau des Säulenelements (100) ein Deckelteil (20), ein Bodenteil (30) und mindestens einen Wandungsring (10) zwischen dem Deckelteil (20) und dem Bodenteil (30) umfasst, **dadurch gekennzeichnet, dass** der Wandungsring (10) aus mehreren Ringsegmenten (1, 1') zusammengesetzt ist, in denen die Pflanzöffnungen (2) ausgebildet sind, dass das Deckelteil (20) endseitig auf dem obersten Wandungsring (10a) und das Bodenteil (30) endseitig auf dem untersten Wandungsring (10e) angeordnet sind, und dass der Aufbau des Säulenelements (100) mit Hilfe von Spannelementen fixiert und stabilisiert wird, die auf der Außenseite des Säulenelements (100) zwischen dem Deckelteil (20) und dem Bodenteil (30) gespannt sind.

2. Säulenelement nach Anspruch 1, **dadurch gekennzeichnet, dass** der Aufbau mehrere Wandungsringe (10) umfasst, die so aufeinander angeordnet sind, dass die Ringsegmente (1, 1') der aneinander grenzenden Wandungsringe (10) versetzt zueinander angeordnet sind.

3. Säulenelement nach Anspruch 1 oder 2, **dadurch gekennzeichnet, dass** die Ringsegmente (1, 1') der Wandungsringe (10) alle dieselben geometrischen Abmessungen haben und baugleich sind.

4. Säulenelement nach einem der Ansprüche 1 bis 3, **dadurch gekennzeichnet, dass** die Ringsegmente (1, 1') jeweils einen seitlichen Randbereich (50, 51) aufweisen und dass die Ringsegmente (1, 1') in den seitlichen Randbereichen (50, 51) miteinander verbunden sind.

5. Säulenelement nach Anspruch 4, **dadurch gekennzeichnet, dass** die seitlichen Randbereiche (50, 51) von zwei benachbarten Ringsegmenten (1') überlappend angeordnet sind und Löcher aufweisen, durch die sich Verbindungsmittel erstrecken, welche die Ringsegmente (1') aneinander fixieren.

6. Säulenelement nach einem der Ansprüche 1 bis 4, **dadurch gekennzeichnet, dass** der eine seitliche Rand der Ringsegmente (1) als Federelement (4) und der andere seitliche Rand der Ringsegmente als Aufnahmenut (3) ausgebildet sind, so dass die Ringsegmente über Spundverbindungen (5) zu einem Wandungsring (10) verbunden sind.

7. Säulenelement nach einem der Ansprüche 1 bis 6, **dadurch gekennzeichnet, dass** im Randbereich (3) der Ringsegmente (1, 1') zapfenartige Vorsprünge ausgebildet sind, die in entsprechende Ausnehmungen (6) im Randbereich (4) eines benachbarten Ringsegments (1, 1') eingreifen, so dass die Ringsegmente (1, 1') eines Wandungsrings (10) in vertikaler Richtung gegeneinander fixiert sind.

8. Säulenelement nach einem der Ansprüche 1 bis 7, **dadurch gekennzeichnet, dass** der untere Rand (7) der Ringsegmente (1, 1') gegenüber seiner gekrümmten Wandungsfläche zurücktritt, so dass beim Zusammenstecken zweier Wandungsringe (10) der untere Rand (7) des oberen Wandungsrings (10) den oberen Rand (8) des unteren Wandungsrings (10) hintergreift.

9. Säulenelement nach einem der Ansprüche 1 bis 8, **dadurch gekennzeichnet, dass** im unteren und oberen Randbereich (7, 8) der Ringsegmente (1, 1') wulstartige Vorsprünge (91) und entsprechende Nuten (92) zur Positionierung und Fixierung der Ringsegmente (1) bzw. Wandungsringe (10) übereinander ausgebildet sind.

10. Säulenelement nach einem der Ansprüche 1 bis 9, **dadurch gekennzeichnet, dass** im Säuleninneren über die Höhe des Säulenelements verteilt mehrere Zerstäuber- und/oder Sprinklerdüsen angeordnet sind, die an die Versorgungsleitung angeschlossen sind.

11. Säulenelement nach einem der Ansprüche 1 bis 10, **dadurch gekennzeichnet, dass** an einer Innenwandung des Ringsegments (1') eine Leiteinrichtung (54) vorgesehen ist, welche die wässrige Nährlösung zu der Pflanzöffnung (2) leitet.

12. Säulenelement nach Anspruch 11, **dadurch gekennzeichnet, dass** die Leiteinrichtung (54) einen Vorsprung umfasst, welcher sich von einer Innenwandung des Ringsegments (1') nach innen erstrecken.

13. Säulenelement nach einem der Ansprüche 1 bis 12, **dadurch gekennzeichnet, dass** das Ringsegment (1, 1') eine Halterung für eine Pflanze aufweist, wobei die Halterung einen ersten Wandungsabschnitt (55), der schräg nach innen weist, und einen zweiten Wandungsabschnitt (56), der schräg nach außen weist, umfasst, wobei die Pflanzöffnung (2) zwischen dem ersten und zweiten Wandungsabschnitt (55, 56) angeordnet ist.

14. Säulenelement nach Anspruch 13, **dadurch gekennzeichnet, dass** die Leiteinrichtung (54) auf der Innenseite des ersten Wandungsabschnitts (55) angeordnet ist.

15. Vorrichtung zum vertikalen Anbau von Pflanzen, die durch Benetzen der Wurzeln mit einer wässrigen Nährlösung ernährt werden, mindestens umfassend:
• ein modular aufgebautes Säulenelement (100) nach einem der Ansprüche 1 bis 14,
• eine Versorgungsleitung, die in das Säuleninnere mündet,
• eine Abflussleitung, die an das untere Ende der Säule angeschlossen ist,
• einen Sammelbehälter für die Nährlösung, der sowohl an die Versorgungsleitung als auch an die Abflussleitung angeschlossen ist, und
• eine Pumpeneinrichtung, mit der die Nährlösung aus dem Sammelbehälter über die Versorgungsleitung ins Säuleninnere gepumpt wird.

## Claims

1. Column element for a device for the vertical cultivation of plants which are nourished by wetting the roots with an aqueous nutrient solution, wherein
• the column element (100) is of modular construction and
• in the walls of the column element (100) a plurality of plant openings (2) are provided in which plants can be positioned so that their roots grow into the interior of the column element (100),
wherein the modular construction of the column element (100) comprises a lid part (20), a base part (30) and at least one wall ring (10) between the lid part (20) and the base part (30), **characterised in that** the wall ring (10) is composed of a plurality of ring segments (1, 1') in which the plant openings (2) are provided, **in that** the lid part (20) is arranged endsidedly on the uppermost wall ring (10a) and the base part (30) is arranged endsidedly on the bottommost wall ring (10e), and **in that** the structure of the column element (100) is fixed and stabilised by means of clamping elements which are clamped on the outer side of the column element (100) between the lid part (20) and the base part (30).

2. Column element according to claim 1, **characterised in that** the structure comprises a plurality of wall rings (10) which are arranged one above the other such that the ring segments (1, 1') of mutually adjacent wall rings (10) are arranged offset from one another.

3. Column element according to claim 1 or claim 2, **characterised in that** the ring segments (1, 1') of the wall rings (10) all have identical geometric dimensions and are identical in construction.

4. Column element according to any one of claims 1 to 3, **characterised in that** the ring segments (1, 1') each have a lateral edge region (50, 51) and **in that** the ring segments (1, 1') are interconnected in the lateral edge regions (50, 51).

5. Column element according to claim 4, **characterised in that** the lateral edge regions (50, 51) of two adjacent ring segments (1') are arranged to be overlapping and have holes through which connecting means extend which fix the ring segments (1') to one another.

6. Column element according to any one of claims 1 to 4, **characterised in that** the one lateral edge of the ring segments (1) is provided as a tongue element (4) and the other lateral edge of the ring segments is provided as a seating groove (3), so that the ring segments are connected to a wall ring (10) by means of tongue-and-groove connections (5).

7. Column element according to any one of claims 1 to 6, **characterised in that** in the edge region (3) of the ring segments (1, 1'), pin-like projections are provided, which engage with corresponding recesses (6) in the edge region (4) of an adjacent ring segment (1, 1'), so that the ring segments (1, 1') of a wall ring (10) are fixed against one another in the vertical direction.

8. Column element according to any one of claims 1 to 7, **characterised in that** the lower edge (7) of the ring segments (1, 1') recedes from its curved wall surface, so that when interlocking two wall rings (10), the lower edge (7) of the upper wall ring (10) engages behind the upper edge (8) of the lower wall ring (10).

9. Column element according to any one of claims 1 to 8, **characterised in that** in the lower and upper edge region (7, 8) of the ring segments (1, 1'), bulging projections (91) and corresponding grooves (92) are provided for positioning and fixing the ring segments (1) or wall rings (10) above one another.

10. Column element according to any one of claims 1 to 9, **characterised in that** a plurality of atomizing and/or sprinkler nozzles connected to the supply line are arranged in the column interior distributed throughout the height of the column element.

11. Column element according to any one of claims 1 to 10, **characterised in that** a guide device (54) is provided on an inner wall of the ring segment (1') to guide the aqueous nutrient solution to the plant opening (2).

12. Column element according to claim 11, **characterised in that** the guide device (54) comprises a projection extending inwards from an inner wall of the ring segment (1').

13. Column element according to any one of claims 1 to 12, **characterised in that** the ring segment (1, 1') has a holder for a plant wherein the holder comprises a first wall portion (55) which is inclined inwards, and a second wall portion (56) which is inclined outwards, wherein the plant opening (2) is arranged between the first and second wall portion (55, 56).

14. Column element according to claim 13, **characterised in that** the guide device (54) is arranged on the inner face of the first wall portion (55).

15. Device for the vertical cultivation of plants, which are nourished by wetting the roots with an aqueous nutrient solution, comprising at least:
• a column element (100) of a modular construction according to any one of claims 1 to 14,
• a supply line opening into the column interior,
• a discharge line connected to the lower end of the column,
• a collector reservoir for the nutrient solution, which is connected both to the supply line and to the discharge line, and
• a pump device with which the nutrient solution is pumped out of the collector reservoir via the supply line into the column interior.

## Revendications

1. Élément de type colonne pour un dispositif de culture verticale de plantes qui sont nourries par mouillage des racines avec une solution nutritive aqueuse,
• lequel élément de type colonne (100) étant de construction modulaire et
• dans la paroi duquel élément de type colonne (100) plusieurs ouvertures de plantation (2) étant formées dans lesquelles les plantes peuvent être positionnées de telle sorte que leurs racines poussent à l'intérieur de l'élément de type colonne (100),
la structure modulaire de l'élément de type colonne (100) comprenant une partie couvercle (20), une partie de fond (30) et au moins un anneau de paroi (10) entre la partie couvercle (20) et la partie de fond (30), **caractérisé en ce que** l'anneau de paroi (10) est composé de plusieurs segments annulaires (1, 1') dans lesquels sont ménagées les ouvertures de plantation (2), **en ce que** la partie couvercle (20) est disposée à l'extrémité de l'anneau de paroi supérieur (10a) et la partie de fond (30) à l'extrémité de l'anneau de paroi inférieur (10e), et **en ce que** la structure de l'élément de type colonne (100) est fixée et stabilisée à l'aide d'éléments de serrage qui sont serrés sur le côté extérieur de l'élément de type colonne (100) entre la partie couvercle (20) et la partie de fond (30).

2. Élément de type colonne selon la revendication 1, **caractérisé en ce que** la structure comprend plusieurs anneaux de paroi (10) qui sont disposés les uns sur les autres de telle sorte que les segments annulaires (1, 1') des anneaux de paroi adjacents (10) sont décalés les uns par rapport aux autres.

3. Élément de type colonne selon la revendication 1 ou 2, **caractérisé en ce que** les segments annulaires (1, 1') des anneaux de paroi (10) ont tous les mêmes dimensions géométriques et sont de construction identique.

4. Élément de type colonne selon l'une des revendications 1 à 3, **caractérisé en ce que** les segments annulaires (1, 1') présentent chacun une zone de bord latérale (50, 51) et **en ce que** les segments annulaires (1, 1') sont reliés entre eux dans les zones de bord latérales (50, 51).

5. Élément de type colonne selon la revendication 4, **caractérisé en ce que** les zones de bord latérales (50, 51) de deux segments annulaires adjacents (1') se chevauchent et présentent des trous à travers lesquels s'étendent des moyens de liaison qui fixent les segments annulaires (1') les uns aux autres.

6. Élément de type colonne selon l'une des revendications 1 à 4, **caractérisé en ce qu'**un bord latéral des segments annulaires (1) est réalisé sous la forme d'un élément formant languette (4) et l'autre bord latéral des segments annulaires est réalisé sous la forme d'une rainure de réception (3), de sorte que les segments annulaires sont reliés par des assemblages à rainure et languette (5) pour former un anneau de paroi (10).

7. Élément de type colonne selon l'une des revendications 1 à 6, **caractérisé en ce que** des saillies en forme de tenon sont formées dans la zone de bord (3) des segments annulaires (1, 1'), qui s'engagent dans des évidements correspondants (6) dans la zone de bord (4) d'un segment annulaire adjacent (1, 1'), de sorte que les segments annulaires (1, 1') d'un anneau de paroi (10) sont fixés l'un contre l'autre dans la direction verticale.

8. Élément de type colonne selon l'une des revendications 1 à 7, **caractérisé en ce que** le bord inférieur (7) des segments annulaires (1, 1') est en retrait par rapport à sa surface de paroi courbe, de sorte que, lorsque deux anneaux de paroi (10) sont emboîtés, le bord inférieur (7) de l'anneau de paroi supérieur (10) vient en prise derrière le bord supérieur (8) de l'anneau de paroi inférieur (10).

9. Élément de type colonne selon l'une des revendications 1 à 8, **caractérisé en ce que** des saillies (91) en forme de bourrelet et des rainures correspondantes (92) sont formées dans la zone de bord inférieur et supérieur (7, 8) des segments annulaires (1, 1') pour positionner et fixer les segments annulaires (1), respectivement les anneaux de paroi (10), les uns au-dessus des autres.

10. Élément de type colonne selon l'une des revendications 1 à 9, **caractérisé en ce qu'**à l'intérieur de la colonne, plusieurs buses de pulvérisation et/ou d'arrosage raccordées à la conduite d'alimentation sont réparties sur la hauteur de l'élément de type colonne.

11. Élément de type colonne selon l'une des revendications 1 à 10, **caractérisé en ce qu'**un moyen de guidage (54) est prévu sur une paroi intérieure du segment annulaire (1'), lequel guide la solution nutritive aqueuse vers l'ouverture de plantation (2).

12. Élément de type colonne selon la revendication 11, **caractérisé en ce que** le moyen de guidage (54) comprend une saillie s'étendant vers l'intérieur depuis une paroi intérieure du segment annulaire (1').

13. Élément de type colonne selon l'une des revendications 1 à 12, **caractérisé en ce que** le segment annulaire (1, 1') présente un support pour une plante, le support comprenant une première partie de paroi (55) dirigée obliquement vers l'intérieur et une deuxième partie de paroi (56) dirigée obliquement vers l'extérieur, l'ouverture de plantation (2) étant disposée entre la première et deuxième partie de paroi (55, 56).

14. Élément de type colonne selon la revendication 13, **caractérisé en ce que** le moyen de guidage (54) est disposé sur le côté intérieur de la première partie de paroi (55).

15. Dispositif pour la culture verticale de plantes qui sont nourries par mouillage des racines avec une solution nutritive aqueuse, comprenant au moins :
• un élément de type colonne (100) de construction modulaire selon l'une des revendications 1 à 14,
• une conduite d'alimentation qui débouche dans l'intérieur de la colonne,
• une conduite de sortie raccordée à l'extrémité inférieure de la colonne,
• un réservoir collecteur pour la solution nutritive, qui est raccordé à la fois à la conduite d'alimentation et à la conduite de sortie, et
• un dispositif de pompage avec lequel la solution nutritive est pompée du réservoir collecteur vers l'intérieur de la colonne via la conduite d'alimentation.
